# EUROPÄISCHE PATENTSCHRIFT

(11) **EP 0 891 704 B1**
(45) Veröffentlichungstag und Bekanntmachung des Hinweises auf die Patenterteilung: **11.09.2002**
(21) Anmeldenummer: 98109609.2
(22) Anmeldetag: 27.05.1998
(51) Int. Cl.: A01K 31/17, A01K 31/16

(54) **Käfiganlage zur Haltung von Geflügel, insbesondere von Legehennen**
Cage system for keeping poultry, in particular laying hens
Système de cages d'élevage de volailles, en particulier de poules pondeuses

(30) Priorität: 17.07.1997 DE 19730652
(43) Veröffentlichungstag der Anmeldung: 20.01.1999
(73) Patentinhaber: Big Dutchman International GmbH, 49377 Vechta (DE)
(72) Erfinder: Otto-Lübker, Friedrich, 49635 Badbergen (DE)
(74) Vertreter: Jabbusch, Wolfgang, Dipl,-Ing., Dr.

(56) Entgegenhaltungen:
- FI-B- 100 503
- RAUCH: "Neue Haltungsformen für Legehennen" LANDTECHNIK, Bd. 46, Nr. 5, Mai 1991, Seiten 232-234, XP000203197 Dusseldorf, DE
- APPLEBY: "Serving Two Masters" POULTRY INTERNATIONAL,Oktober 1997, Seiten 44-48, XP000197980 Petersfield, UK
- DATABASE WPI Week 8334 Derwent Publications Ltd., London, GB; AN 83-745853 XP002079884 & SU 967 431 A (ALEKSEEV) , 23. Oktober 1982

## Beschreibung

Die Erfindung bezieht sich auf eine Käfiganlage mit Käfigen zur Haltung von Geflügel, insbesondere zur Haltung von Legehennen, mit den Käfigen gemeinsamen Versorgungseinrichtungen, zum Beispiel für Futter und Wasser, und mit Entsorgungseinrichtungen, zum Beispiel für Eier, beziehungsweise auch Kot, wobei jeder Käfig mit einem Legenest und einem Sandbad ausgerüstet ist.

Solch eine Käfiganlage ist in RAUCH : 'Neue Haltungsformen für Legehennen' LANDTECHNIK, Bd. 46, Nr. 5, Mai 1991, Seiten 232-234, Düsseldorf, DE offenbart.

Zur Verbesserung bisher bekannter Käfigbatterien sind bereits Maßnahmen vorgeschlagen worden, den Tieren ausreichende Grundfläche und Freßplatzlänge zu bieten. Damit die Tiere auch natürliche Verhaltensweisen ausüben können, ist darüber hinaus das Vorhandensein von Legenestern, Sitzstangen sowie der Möglichkeit des Sandbades vorgeschlagen worden. Die Ausrüstung eines Käfigs mit Legenest und außerdem mit einem Sandbad vergrößert den Bedarf an Stellfläche für eine Käfiganlage, zumal am Stellflächen-Bedarf auch die unbedingt notwendigen Versorgungs- und Entsorgungseinrichtungen, wie Futtertröge, Eierbänder für die Abfuhr der gelegten Eier, Kotauffangeinrichtungen, zusammen mit den dafür benötigten Zusatzeinrichtungen, wie Futterverteiler und -dosierer mit entsprechenden Steuerungen, Belüftungsanlagen, Antriebe für das Eierband und dergleichen, beteiligt sind. Die für die gesamte Anlage eines Stalls erforderlichen Investitionen sind jedoch nur dann rentabel, wenn die Anzahl der in der Käfiganlage zu haltenden Legehennen zu einer ausreichenden Eierproduktion führen kann.

Der Erfindung liegt die Aufgabe zugrunde, eine Käfiganlage zur Haltung von Legehennen zu schaffen, die den Tieren ermöglicht, natürliche Verhaltensweisen auszuüben, und bei ausreichender Grundfläche und Freßplatzlänge, bezüglich der benötigten Stellfläche und damit der Wirtschaftlichkeit der Käfiganlage optimiert ist.

Diese Aufgabe ist erfindungsgemäß dadurch gelöst worden, daß der Grundriß jedes Käfigs etwa L-förmig ist, wobei das Sandbad im Bereich des freien Endes eines der L-Schenkel angeordnet ist und daß zwei Käfige mit L-förmigem Grundriß jeweils um 180° gegeneinander gedreht in einer Käfigeinheit zusammengefaßt sind, derart, daß die Sandbäder der Käfige im Bereich der Längsmittellinie der gebildeten Käfigeinheit in einer Ebene fluchtend hintereinander in einer Reihe angeordnet sind.

Jeweils zwei im Grundriß identische Käfige sind zu einer Käfigeinheit aneinandergesetzt. Die L-Form des Grundrisses ergibt sich dadurch, daß bei einem etwa rechteckigen Grundriß eines Käfigs der ebenfalls rechteckige Bereich der vom Sandbad eingenommen wird, vor eine Längsseite des rechteckigen Käfiggrundrisses gesetzt ist. Wenn der Bereich des Sandbades zum Eeispiel etwa halb so lang ist wie die Käfiglänge, ergibt sich ein etwa L-förmiger Käfiggrundriß und bei zu einer Käfigeinheit zusammengesetzten Käfigen ergibt sich etwa in der Mitte der Käfigeinheit eine Überlappung der Bereiche der Sandbäder. Da jedem Käfig ein Sandbad zugeordnet ist, das einen bestimmten Anteil an der für einen Käfig erforderlichen Stellfläche hat, wurde die aus einer Vielzahl von Käfigen bestehende Käfiganlage eine größere Aufstellfläche benötigen. Da die Bereiche der Sandbäder sich bei den erfindungsgemäßen Käfigen im Mittelbereich der Käfigeinheit überlappen, was durch die Aneinandersetzung jeweils um 180° gegeneinander gedrehter Käfige erreicht wird, ist jedoch der Bedarf an Aufstellfläche für die Käfiganlage in vorteilhafter wieder Weise reduziert.

Die Käfiganlage ist aus mehreren in Reihen und Etagen anordbaren Käfigeinheiten zusammenstellbar, wobei Einrichtungen für die Versorgung mit Futter und Wasser, beziehungsweise für die Entsorgung der Eier und des Kotes, für jede der Etagen vorgesehen sind. Die bei der erfindungsgemäßen Käfiganlage aufgrund der Überlappung der Sandbadebereiche mögliche Reduzierung der Tiefe einer Käfigeinheit erlaubt mit Vorteil bei einer zur Verfügung stehenden Aufstellfläche zum Beispiel auch die Verbreiterung der Gänge zwischen den Käfiganlagen in einem Stall, wodurch eine bessere Betreuung der gehaltenen Legehennen durch das Farmpersonal gegeben ist.

Während die Sandbäder der erfindungsgemäßen Käfige im Bereich der Längsmittellinie der gebildeten Käfigeinheit durch die beschriebene Überlappung in einer Ebene fluchtend hintereinander angeordnet sind, befinden sich die Legenester wechselseitig entlang der Sandbad-Reihe. Dies läßt sich optimal verwirklichen, wenn sowohl die Flächenbereiche der Legenester als auch der Sandbäder Rechteckformen etwa gleicher Abmessung haben. Dabei ist dann das Legenest des ersten Käfigs einer Käfigeinheit in einem Bereich angeordnet, der grundrißmäßig gesehen, dem Sandbad des jeweils zweiten Käfigs unmittelbar benachbart ist. Die einander benachbarten Bereiche der Sandbäder und Legenester einer Käfigeinheit sind durch eine Scheidewand voneinander getrennt, so daß die Käfige einer Käfigeinheit voneinander separiert sind, was der Haltung der Legehennen und einer besseren Betreuung durch das Farmpersonal förderlich ist.

Jeder Käfig einer Käfigeinheit ist mit besonderem Vorteil mit einer betätigbaren Absperreinrichtung zur wahlweisen Sperrung oder Freigabe des Zuganges des Legenestes oder des Sandbades ausgerüstet. Jede Absperreinrichtung kann zum Beispiel von einer drehbetätigbaren Welle V-förmig in den Käfig hängende Pendelklappen umfassen, wobei eine erste Pendelklappe dem Legenest eines Käfigs und eine zweite Pendelklappe dem Sandbad eines jeweils benachbarten Käfigs zugeordnet ist. Die erfindungsgemäß vorgesehene Absperreinrichtung ermöglicht mit Vorteil eine kombinierte Nutzung auch als Auswerfsystem einmal für das Sandbad und zum anderen für das Legenest. Es werden also nicht nur den Tieren die Zugänge zum Sandbad beziehungsweise zum Legenest gesperrt, sondern es wird zum Beispiel ein Sandbad durch Verschwenken einer entsprechenden Pendelklappe gesperrt und gleichzeitig ein im Sandbad befindliches Tier ausgeworfen. Gleichzeitig schwenkt die den Zugang zum Legenest bei offenem Sandbadekasten sperrende zweite Pendelklappe in eine Stellung, bei der nunmehr der Zugang zum Legenest offen ist. In Anlehnung an die natürlichen Verhaltensweisen der Legehennen können mit Vorteil gemäß einem zeitlich ablaufenden Steuerprogramm die Legenester oder Sandbäder zur Nutzung durch die Tiere zur Verfügung gestellt werden.

Innerhalb der Käfiganlage in einer Etage hintereinander befindliche Käfige können eine durchgehende Welle mit Pendelklappen gemeinsam haben. Dadurch verringert sich der Bauaufwand für die Käfiganlage hinsichtlich der Installation betätigbarer Absperreinrichtungen.

Jeder Käfig weist einen zum Legenest und Sandbad hin abfallend geneigten Boden auf, wobei sich die Entsorgungseinrichtung für Eier an der tiefsten Stelle des Bodens der Käfige etwa in der Mitte einer Käfigeinheit befindet. Die Entsorgungseinrichtung für Eier ist vorzugsweise als an sich bekanntes Eierband ausgebildet, das sich durch die Käfigeinheiten innerhalb einer Etage der Käfiganlage erstreckt, womit der Bauaufwand ebenfalls in vorteilhafter Weise vermindert ist.

Durch ein zentral liegendes, mittiges Eierband würde normalerweise Anlagenbreite verloren gehen. Durch die Anordnung der überlappenden Sandbäder über dem Eierband wird diese Fläche zurückgewonnen. Gleichzeitig befinden sich somit die Sandbäder in Tierhöhe, was eine bessere Annahme der Sandbäder durch die Tiere gewährleistet.

Das mittige Eierband befindet sich mit Vorteil in einer maximalen Entfernung vom Futtertrog. Direkt am Trog werden aufgrund des ständigen Betriebes nur wenige Eier gelegt. Die Hennen suchen ruhigere Zonen zur Eiablage auf, nämlich entweder die geöffneten Legenester oder die Bereiche vor dem dann geschlossenen Sandbad. In jedem Fall rollen die Eier bei extrem kurzem Abrollweg über den abfallend geneigten Boden direkt auf das Eierband. Die dabei auftretende Kontamination mit Hühnerkot ist aufgrund der kurzen Rollwege gering und auch die Entstehung von Knickeiern, wie sie bei längeren Abrollwegen häufig gegeben ist, wird vermindert.

Die Sandbäder jeder Käfigeinheit und somit die Sandbäder der Käfigeinheiten einer Etage sind über dem Eierband angeordnet. Jedes Sandbad kann als mit Sand befüllbarer Kasten ausgerüstet sein. Da der Sand regelmäßig auszuwechseln ist, kann der für die Auswechslung erforderliche Arbeitsaufwand durch Farmpersonal oder dergleichen dadurch entfallen oder zumindest verringert werden, daß in einer Reihe befindliche Sandbäder in Form einer Rinne vorliegen und daß die Böden der Sandbäder beziehungsweise der Rinnen als zum Beispiel intervallweise betätigbare Sand-Transportbänder ausgebildet sind, wobei sich jeweils ein Sand-Transportband durch die Käfigeinheiten in einer zugeordneten Etage der Käfiganlage erstreckt.

Der Annahme des Legenestes zur Eiablage durch ein Tier ist auch förderlich, daß es zum Innenraum des Käfigs hin mit einem Schirmelement abgeschirmt ist. Das Schirmelement kann zum Beispiel ein im Käfig vor dem Legenest hängender Vorhang sein, der eine mittig angebrachte Schlupföffnung hat, durch die ein Tier das Legenest erreichen kann, wenn es aufgrund einer vorbestimmten Drehstellung der zugeordneten Pendelklappe der Absperrvorrichtung offen beziehungsweise zugänglich ist.

Jeder Käfig ist mit wenigstens einer Sitzstange ausgerüstet, die sich im Bereich unmittelbar vor dem Sandbad des jeweiligen Käfigs befindet. Dabei steht die Sitzstange im Käfig quer zur Längserstreckung des Sandbades ausgerichtet, wodurch erreicht wird, daß eine übermäßige Verkotung besonders in der Dunkelphase (Legenest geschlossen - Sandbad offen) nicht anzunehmen ist, da die Tiere während der Nacht die Sitzstangen als Ruhezone bevorzugen werden.

Die Versorgungseinrichtung für Wasser ist mit Trinknippeln ausgerüstet, von denen sich jeweils einer vor dem Legenest des jeweiligen Käfigs befindet. Eine Anordnung der Trinknippel vor dem Legenest fördert die Legenestannahme durch die Tiere.

Bei der erfindungsgemäßen Käfiganlage ist des weiteren vorgesehen, daß sie eine Einrichtung zur Kotbelüftung aufweist, die unterhalb der an den vorderen Futtertrog-Seiten der Käfige befindlichen Futtertröge angeordnete Luftführungskanäle mit Austrittsöffnungen umfaßt, die gegen eine unter den geneigten Käfigboden befindliche Kotwanne gerichtet sind. Damit erfolgt die Kotbelüftung von beiden Seiten der Käfigeinheit beziehungsweise von beiden Seiten der Etage einer Käfiganlage unterhalb der Futtertröge. Da der größte Kotanfall stets im Bereich eines Futtertroges zu erwarten ist, ist durch die unmittelbare Nähe des Luftführungskanals, zum Beispiel in Form eines Belüftungsrohres, ein hoher Trockensubstanzanteil gewährleistet. In an sich bekannter Weise kann die Kotwanne auch als Transportband ausgerüstet sein, das den anfallenden Hühnerkot kontinuierlich oder intervallweise einer Entsorgung im Bereich eines der beiden Kopfenden einer Etage der Käfiganlage zuführt.

Die erfindungsgemäße Käfiganlage zeichnet sich insgesamt durch strukturierte Käfige mit einer konsequenten Trennung vcn Futterversorgung vorne am Käfig, Legenest und Sandbad hinten im Käfig sowie von Ruhezone mit Sitzstangen dazwischen aus. In Anlehnung an die natürlichen Verhaltensweisen von Legehennen werden Legenest und Sandbad abwechselnd zu jeweils vorbestimmbaren Zeiten zur Verfügung gestellt. Während der Hauptlegephase ist das Legenest jeweils einer Hälfte einer Käfigeinheit geöffnet und das jeweils gegenüberliegende Sandbad der anderen Hälfte der Käfigeinheit geschlossen. Dadurch können die Hennen keine Eier in das Sandbad legen. Die evtl. vor dem Sandbad von den Hennen gelegten Eier rollen direkt auf das darunter befindliche Eiersammelband.

Um eine übermäßige Legenestverschmutzung durch im Legenest brütende und übernachtende Hennen zu vermeiden, kann circa ab der zweiten Tageshälfte, in jedem Fall aber erst nach Abschluß der Hauptlegephase, das Legenest verschlossen und somit gleichzeitig das Sandbad den Legehennen wieder zur Verfügung gestellt werden. Auf diese Weise wird ein Maximum an Nesthygiene erreicht, was sich in einer geringeren Keimbelastung der Eier niederschlägt. Die erfindungsgemäße Käfiganlage ermöglicht die Einhaltung einer optimalen Nest- und dadurch auch Eihygiene. Ebenso wird das "Verlegen" von Eiern in das Sandbad verhindert und dadurch alle damit verknüpften Begleiterscheinungen vermieden, wie Eierverlust, Eierfressen und in der Folge eine verstärkte Keimbelastung der Einstreu mit allen hygienischen Risiken. Da sich die Legenester wechselseitig entlang der gesamten Eierbandstrecke befinden, wird bereits im Vorfeld eine optimale Eischalenqualität erreicht, ohne daß ein automatischer Eierbandvorlauf notwendig ist.

Eine Kostenersparnis für die Aufstellung der Käfiganlage wird durch das zentralliegende, mittige Eierband ebenfalls erreicht, da im Bereich der Kopfenden und Antriebe Kostenersparnisse erreicht werden, denn es ist nur noch ein einziges Eierband für zwei Käfige einzusetzen.

Die zur Verfügung stehende Futtertroglänge wird optimal ausgenutzt für die Aufstallung einer bestimmten Anzahl von Tieren. Unter Einhaltung der gesetzlichen Vorschriften für Troglänge und pro Tier zur Verfügung zu stellender Fläche, ergibt sich bei einer Käfiganlage gemäß der Erfindung eine Verminderung der Anlagenreihen, wodurch eine Kostenersparnis im Bereich relativ teurer Anlagen-Endsätze für jede Reihe erreichbar ist.

Andererseits kann in vorteilhafter Weise trotz Einhaltung aller vorgeschriebenen Grenzwerte auch eine höhere Besatzdichte pro Quadratmeter Stallgrundfläche erreicht werden. Die erfindungsgemäße Käfiganlage bietet die Anordnung relativ breiter Gänge für eine bessere Betreuung durch das Farmpersonal. Die Anordnung der Sandbäder in Tierhöhe über dem zentralen Eierband erlaubt eine niedrigere Etagenhöhe und damit eine verbesserte Kontrollmöglichkeit durch das Personal.

Bei der erfindungsgemäßen Käfiganlage ist das Verhältnis von gesetzlich vorgegebener Troglänge zu Käfigfläche durch den Versatz beziehungsweise das Überlappen der Sandbäder beziehungsweise Legenester optimiert. Die Troglänge, die einer Käfigbreite entspricht, ist ein gesetzlich vorgegebener Wert pro Tier. Da pro Tier auch eine bestimmte Käfigfläche gesetzlich vorgegeben ist, ergibt sich rechnerisch stets eine bestimmte Käfigtiefe. Bei dem erfindungsgemäßen Käfig ermöglicht die versetzte Anordnung von Sandbad und Legenest, beziehungsweise der L-förmige Grundriß mit der entsprechenden Überlappung bei jeder Käfigeinheit, daß dieses Verhältnis von vorgegebener Troglänge zu Käfigfläche stets eingehalten werden kann, ohne daß Aufstellfläche im Stall verschenkt wird.

Ein Ausführungsbeispiel der Erfindung, aus dem sich weitere erfinderische Merkmale ergeben, ist in der Zeichnung dargestellt. Es zeigen:
- Fig. 1: einen Grundriß eines Käfigs,
- Fig. 2: den Grundriß einer aus Käfigen mit einem Grundriß gemäß Fig. 1 zusammengesetzten Käfigeinheit einer Käfiganlage, die wiederum aus aneinandergereihten Käfigeinheiten gemäß Fig. 2 besteht,
- Fig. 3: eine schematische Seitenansicht einer Käfiganlage mit in drei Etagen übereinanderstehenden Käfigeinheiten gemäß Fig. 2,
- Fig. 4: eine schematische Ansicht des Mittelbereiches einer Käfigeinheit mit einer Absperreinrichtung in einer Betriebsstellung, in der das Legenest geschlossen und das Sandbad zugänglich ist,
- Fig. 5: eine Ansicht gemäß Fig. 4 mit der Absperrvorrichtung in einer Betriebsstellung, in der das Legenest zugänglich jedoch das Sandbad geschlossen ist und
- Fig. 6: eine schematische Ansicht der Absperreinrichtung für einen Käfig.

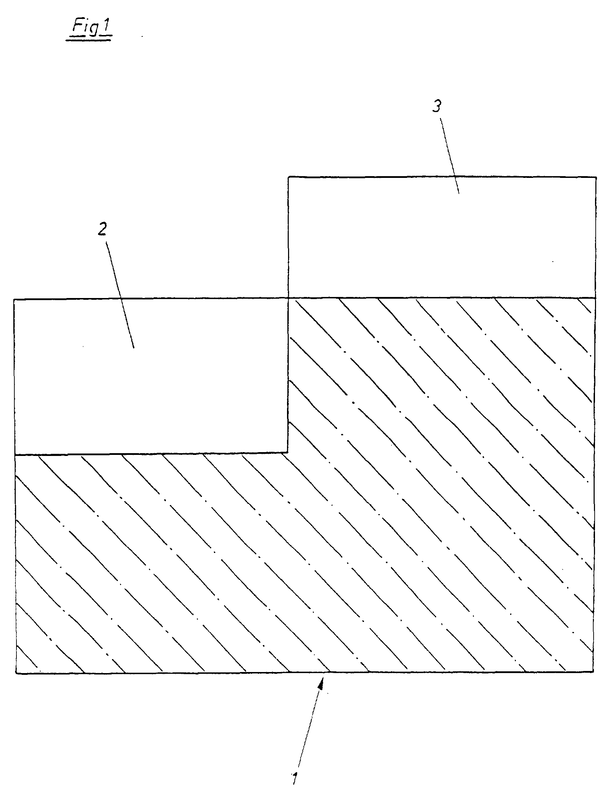

Fig. 1 zeigt den Grundriß eines Käfigs in schematischer Darstellung. Der Grundriß des Käfigs 1 ist etwa rechteckförmig. Im links oben befindlichen Bereich des Rechtecks befindet sich eine ebenfalls rechteckige Teilfläche, die für die Einrichtung eines Legenestes 2 genutzt werden kann. Im rechts oben befindlichen Bereich des Rechteckes befindet sich ein außerhalb liegender Flächenbereich, für ein Sandbad 3. Mit dem vorstehenden Sandbad 3 wird der Grundriß des Käfigs etwa L-förmig, wobei das Sandbad 3 den unteren kürzeren Schenkel des lateinischen Buchstaben L bildet.

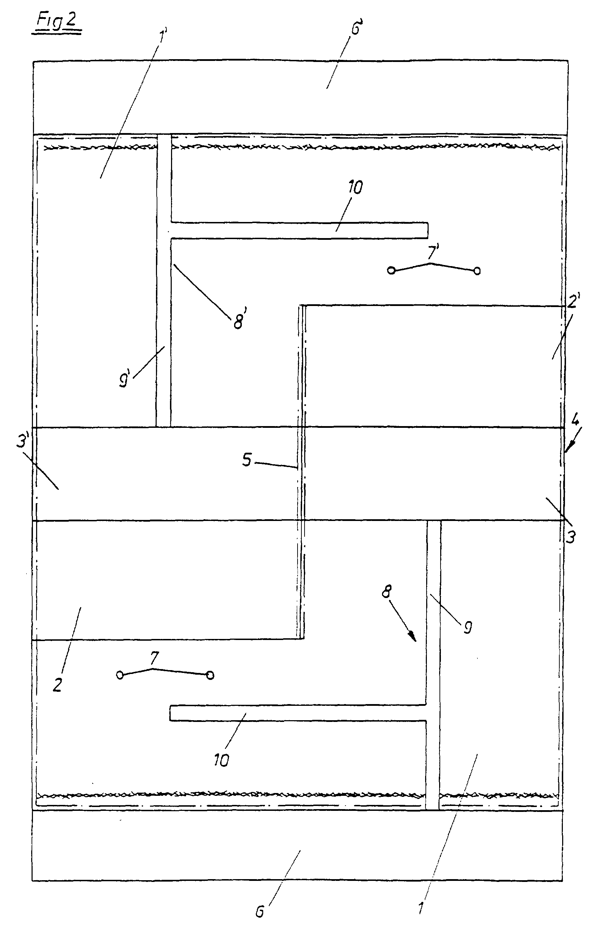

Fig. 2 zeigt den Grundriß einer Käfigeinheit 4, die aus zwei Käfigen 1,1' mit einem Grundriß gemäß Fig. 1 zusammengesetzt ist. Der Käfig 1' ist entsprechend dem Käfig 1 ausgebildet, jedoch um 180° gedreht so an den Käfig 1 gesetzt, daß eine Käfigeinheit 4 gebildet ist, bei der die Sandbäder 3,3' im Bereich der Längsmittellinie der gebildeten Käfigeinheit 4 in einer Ebene fluchtend hintereinander in einer Reihe angeordnet sind. Die Legenester 2,2' befinden sich wechselseitig entlang der Reihe mit den Sandbädern 3,3'. Das Legenest 2 des ersten Käfigs 1 der Käfigeinheit 4 ist damit in einem Bereich angeordnet, der grundrißmäßig gesehen, dem Sandbad 3' des jeweils zweiten Käfigs 1' der Käfigeinheit 4 unmittelbar benachbart ist und umgekehrt. Die einander benachbarten Bereiche der Sandbäder 3,3' und Legenester 2,2' einer Käfigeinheit 4 sind durch eine hier durch strichpunktierte Linien angedeutete Scheidewand 5 voneinander getrennt.

Vorn vor den Breitseiten der zu einer Käfigeinheit 4 zusammengesetzten Käfige 1,1' ist ein hier lediglich schematisch angedeuteter Futtertrog 6,6' montiert. Trinknippel der Wasserversorgung sind mit 7 beziehungsweise 7' bezeichnet. In jeden Käfig ist außerdem noch eine T-förmige Sitzstange 8 beziehungsweise 8' installiert, die sich mit einem Sitzstangenteil 9 beziehungsweise 9' im Bereich unmittelbar vor dem Sandbad 3 beziehungsweise 3' des jeweiligen Käfigs 1 beziehungsweise 1' befindet. Ein jeweils zweiter Sitzstangenteil 10 beziehungsweise 10' erstreckt sich mit Vorteil unmittelbar bis vor das Legenest 2 beziehungsweise 2' des jeweiligen Käfigs, wodurch jedes Legenest 2,2' für die Tiere leicht erreichbar ist. Die Anordnung der Trinknippel 7,7' unmittelbar vor dem Legenest 2,2' ist der Legenestannahme förderlich.

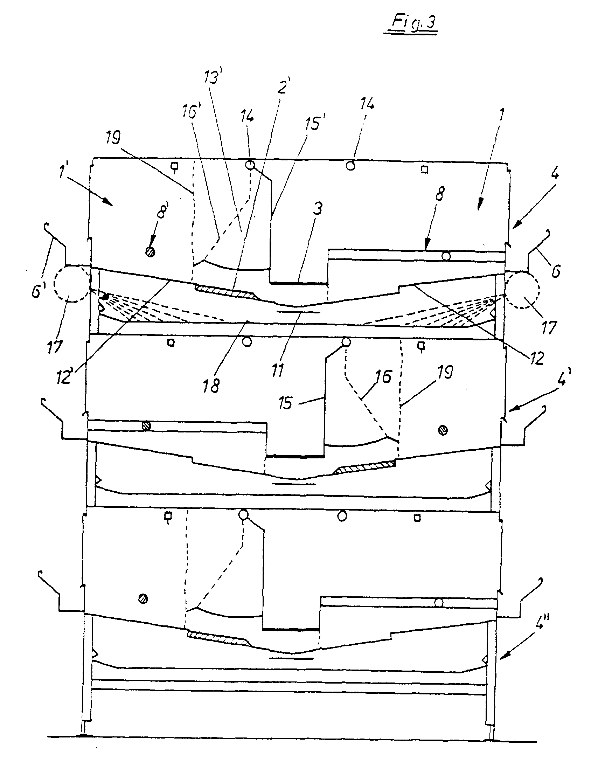

In Fig. 3 ist eine Seitenansicht einer Käfiganlage im Schnitt schematisch dargestellt. Sichtbar sind drei Etagen aus übereinander gestellten Käfigeinheiten 4,4' und 4''. Gleiche Bauteile sind mit gleichen Bezugszahlen bezeichnet. Da die Käfigeinheiten 4,4',4'' identisch sind, werden die in Fig. 3 sichtbaren Einzelheiten anhand der oberen Etage mit der Käfigeinheit 4 nachstehend erläutert. Fig. 3 verdeutlicht, daß jeder Käfig 1 beziehungsweise 1' einer Käfigeinheit 4 einen zum Legenest 2' und Sandbad 3 hin abfallend geneigten Boden 12,12' aufweist, und daß sich die als Eierband 11 ausgebildete Entsorgungseinrichtung für Eier an der tiefsten Stelle des Bodens 12 beziehungsweise 12' der Käfige 1 beziehungsweise 1' etwa in der Mitte einer Käfigeinheit 4 befindet. Der Boden 12 beziehungsweise 12' der Käfige besteht in an sich bekannter Weise aus einem Gitterrost, so daß Kot durchfallen kann, jedoch die Eier entlang dem geneigten Boden 12 zur Mitte der Käfigeinheit 4 rollen können, um dann vom Eierband 11 abtransportiert zu werden.

Angedeutet ist eine Absperrvorrichtung 13', die dem Käfig 1' der Käfigeinheit 4 zugeordnet ist. Die Absperrvorrichtung umfaßt von einer drehbetätigbaren Welle 14' V-förmig in den Käfig 1' hängende Pendelklappen 15' und 16', wobei die Pendelklappe 16' dem Legenest 2' des Käfigs 1' und die Pendelklappe 15' dem Sandbad 3 des Käfigs 1 der Käfigeinheit 4 zugeordnet ist.

Mit 14 ist die parallele Welle einer zweiten Absperreinrichtung bezeichnet, deren Pendelklappen außerhalb dieser Zeichnungsebene liegen. Die Pendelklappen der Absperreinrichtung sind jedoch bei der identischen Käfigeinheit 4' in der darunterliegenden Etage der Käfiganlage erkennbar.

Die Legenester 2 beziehungsweise 2' können aus in Vertiefungen der Böden 12 beziehungsweise 12' eingesetzte Matten aus geeignetem Material bestehen. Fig. 3 läßt erkennen, daß das Eierband im zentralen Bereich der Käfigeinheiten 4,4',4'' unter den Sandbädern 3,3' angeordnet ist.

Jede Etage aus Käfigeinheiten 4,4' beziehungsweise 4'' weist eine Einrichtung zur Kotbelüftung auf, die unterhalb der an den vorderen Futtertrog-Seiten der Käfige 1 beziehungsweise 1' befindlichen Futtertröge 6 beziehungsweise 6' angeordnete Luftführungskanäle 17,17' mit Austrittsöffnungen umfaßt, die gegen eine unter dem geneigten Käfigboden 12 beziehungsweise 12' befindliche Kotwanne 18 gerichtet sind. Entsprechende Luftstrahlenbündel sind durch gestrichelte Linien schematisch angedeutet.

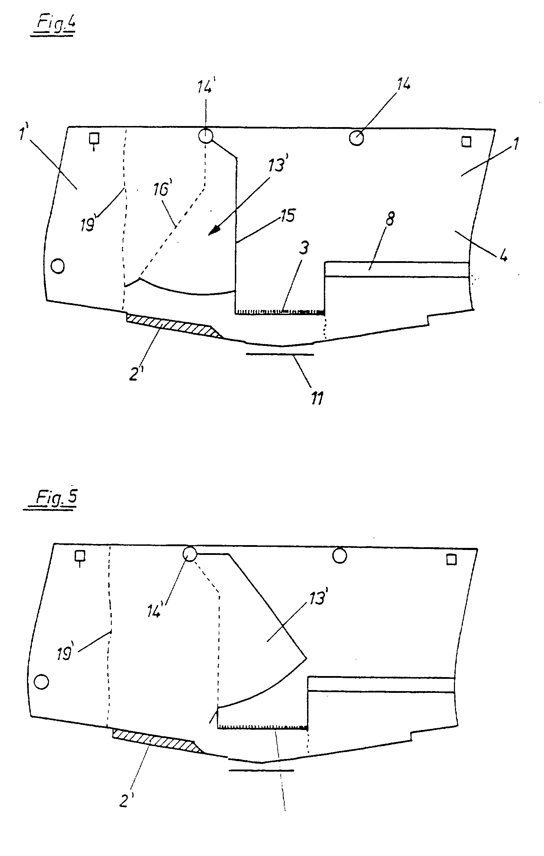

Fig. 4 zeigt einen Ausschnitt des Mittelbereichs der Käfigeinheit 4 gemäß Fig. 3 in leicht vergrößertem Maßstab. Gleiche Bauteile sind mit gleichen Bezugszahlen bezeichnet. Die Pendelklappen der Absperreinrichtung 13' sind durch Drehung der Welle 14' in eine Stellung gebracht, bei der das Sandbad 3 des Käfigs 1 der Käfigeinheit 4 zugänglich ist. Dabei ist das Legenest 2' des Käfigs 1 der Käfigeinheit 4 jedoch durch die Pendelklappe 16' der Absperrvorrichtung 13' geschlossen.

Fig. 5 zeigt eine Ansicht entsprechend Fig. 4, bei der die Absperrvorrichtung 13' in einer Betriebsstellung steht, die das Sandbad 3 verschließt und den Zugang zum Legenest 2' ermöglicht.

Legehennen, die bei Bewegung der Pendelklappen von einer Betriebsstellung in die andere aufgrund einer Drehung der Welle 14' noch entweder auf dem Legenest oder im Sandbad sitzen, werden von der jeweiligen Pendelklappe aus dem Legenest 2,2' beziehungsweise aus dem Sandbad 3,3' geworfen.

In den Fig. 4 und 5 ist auch zu erkennen, daß der Zugangsbereich zum Legenest 2' mit einem als Schirmelement 19,19' dienender Vorhang 19' abgeschirmt ist.

Außerdem ist, wie auch bereits aus Fig. 3 erkennbar, durch die als strichpunktierte Linie gezeichnete Pendelklappe 16' angedeutet, daß diese als Gitter ausgebildet sein kann, während die Pendelklappe 15' eine dichte Platte ist, durch die verhindert wird, daß sandbadende Legehennen Sand auf das benachbarte Legenest 2' schleudern.

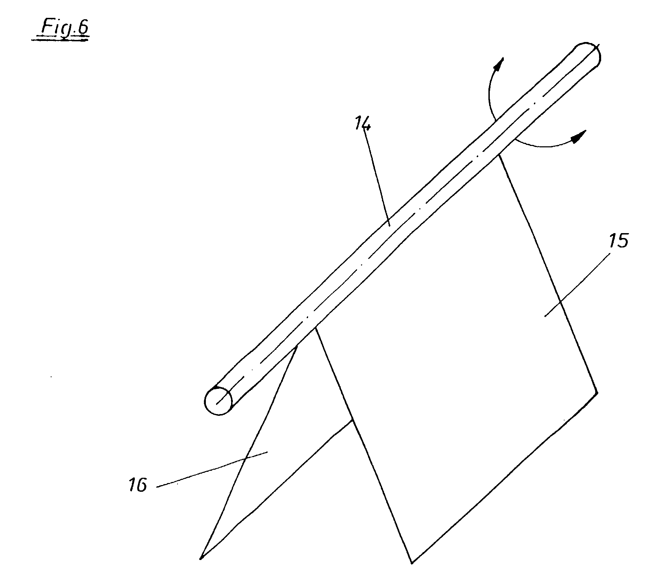

In Fig. 6 ist eine Absperr- und Auswerfeinrichtung schematisch dargestellt. Fig. 6 verdeutlicht, daß an der Welle 14 zwei Pendelklappen 15 und 16 V-förmig hängen, wobei die Pendelklappe 16 auch, wie vorbeschrieben, als Gitter oder Rost ausgebildet sein kann. Die Verschwenkung der Pendelklappen bei einer Drehbewegung der Welle 14 ist durch einen Doppelpfeil angedeutet.

## Patentansprüche

1. Käfiganlage mit Käfigen zur Haltung von Geflügel, insbesondere zur Haltung von Legehennen, mit den Käfigen gemeinsamen Versorgungseinrichtungen, zum Beispiel für Futter und Wasser und Entsorgungseinrichtungen, zum Beispiel für Eier beziehungsweise auch für Kot, wobei jeder Käfig mit einem Legenest und einem Sandbad ausgerüstet ist,
**dadurch gekennzeichnet,**
**daß** der Grundriß jedes Käfigs (1) etwa L-förmig ist, wobei das Sandbad (3) im Bereich des freien Endes eines der L-Schenkel angeordnet ist und daß zwei Käfige (1,1') mit L-förmigem Grundriß jeweils um 180° gegeneinander gedreht in einer Käfigeinheit (4) zusammengefaßt sind, derart, daß die Sandbäder (3,3') der Käfige (1,1') im Bereich der Längsmittellinie der gebildeten Käfigeinheit (4) in einer Ebene fluchtend hintereinander in einer Reihe angeordnet sind.

2. Käfiganlage nach Anspruch 1, **dadurch gekennzeichnet, daß** sie aus mehreren in Reihen und Etagen anordbaren Käfigeinheiten (4,4',4'') zusammenstellbar ist, wobei Versorgungseinrichtungen und Entsorgungseinrichtungen für jede der Etagen vorgesehen sind.

3. Käfiganlage nach einem der Ansprüche 1 und 2, **dadurch gekennzeichnet, daß** sich die Legenester (2,2') wechselseitig entlang der Sandbad-Reihe befinden.

4. Käfiganlage nach einem der Ansprüche 1 - 3, **dadurch gekennzeichnet, daß** das Legenest (2) des ersten Käfigs (1) einer Käfigeinheit (4) in einem Bereich angeordnet ist, der, grundrißmäßig gesehen, dem Sandbad (3') des jeweils zweiten Käfigs (1') unmittelbar benachbart ist und daß die einander benachbarten Bereiche der Sandbäder (3, 3') und Legenester (2,2') einer Käfigeinheit (4) durch eine Scheidewand (5) voneinander getrennt sind.

5. Käfiganlage nach einem der vorhergehenden Ansprüche, **dadurch gekennzeichnet, daß** jeder Käfig (1,1') einer Käfigeinheit (4) mit einer betätigbaren Absperreinrichtung (13,13') zur wahlweisen Sperrung oder Freigabe des Zugangs zum Legenest (2,2') oder zum Sandbad (3,3') ausgerüstet ist.

6. Käfiganlage nach Anspruch 5, **dadurch gekennzeichnet, daß** jede Absperreinrichtung (13,13') von einer drehbetätigbaren Welle (14,14') V-förmig in den Käfig (1,1') hängende Pendelklappen (15,16;15',16') umfaßt, wobei jeweils eine der Pendelklappen (16,16') dem Legenest (2,2') eines Käfigs (1') und die jeweils andere Pendelklappe (15,15') dem Sandbad (3,3') eines Käfigs (1) einer Käfigeinheit (4) zugeordnet ist.

7. Käfiganlage nach Anspruch 6, **dadurch gekennzeichnet, daß** innerhalb der Käfiganlage in einer Etage hintereinander befindliche Käfige (1,1') eine durchgehende Welle (14,14') mit Pendelklappen (15,16;15',16') gemeinsam haben.

8. Käfiganlage nach einem der vorhergehenden Ansprüche, **dadurch gekennzeichnet, daß** jeder Käfig (1,1') einen zum Legenest (2,2') und Sandbad (3,3') hin abfallend geneigten Boden (12,12') aufweist und daß sich die Entsorgungseinrichtung für Eier an der tiefsten Stelle des Bodens (12,12') der Käfige (1,1') etwa in der Mitte einer Käfigeinheit (14,14',14'') befindet.

9. Käfiganlage nach Anspruch 8, **dadurch gekennzeichnet, daß** die Entsorgungseinrichtung für Eier als an sich bekanntes Eierband (11) ausgebildet ist, das sich durch die Käfigeinheiten (4,4',4'') innerhalb einer Etage der Käfiganlage erstreckt.

10. Käfiganlage nach einem der Ansprüche 1 - 9, **dadurch gekennzeichnet, daß** die Sandbäder (3,3') jeder Käfigeinheit (4) und somit die Sandbäder (3,3') der Käfigeinheiten (4,4',4'') einer Etage über dem Eierband (11) angeordnet sind.

11. Käfiganlage nach einem der Ansprüche 1 - 10, **dadurch gekennzeichnet, daß** jedes Sandbad (3) als mit Sand befüllbarer Kasten ausgebildet ist.

12. Käfiganlage nach einem der Ansprüche 1 - 9, **dadurch gekennzeichnet, daß** in einer Reihe befindliche Sandbäder (3,3') in Form einer Rinne vorliegen und daß die Böden der Sandbäder (3,3') beziehungsweise der Rinnen als intervallweise betätigbare Sand-Transportbänder ausgebildet sind, wobei sich jeweils ein Sand-Transportband durch die Käfige (1,1') der Käfigeinheiten (4,4',4'') in einer jeweils zugeordneten Etage der Käfiganlage erstreckt.

13. Käfiganlage nach einem der Ansprüche 1 - 12, **dadurch gekennzeichnet, daß** jedes Legenest (2,2') zum Innenraum des Käfigs (1,1') hin mit einem Schirmelement (19,19') abgeschirmt ist.

14. Käfiganlage nach Anspruch 13, **dadurch gekennzeichnet, daß** das Schirmelement (19,19') ein im Käfig (1,1') vor dem Legenest (2,2') hängender Vorhang ist, der eine etwa mittig angebrachte Schlupföffnung hat.

15. Käfiganlage nach einem der vorhergehenden Ansprüche, **dadurch gekennzeichnet, daß** jeder Käfig (1,1') mit wenigstens einer Sitzstange (8,8') ausgerüstet ist, die sich im Bereich unmittelbar vor dem Sandbad (3,3') des jeweiligen Käfigs (1,1') befindet.

16. Käfiganlage nach einem der Ansprüche 1 - 15, **dadurch gekennzeichnet, daß** die Versorgungseinrichtung für Wasser mit Trinknippeln (7,7') ausgerüstet ist, von denen sich jeweils wenigstens einer vor dem Legenest (2,2') des jeweiligen Käfigs (1,1') befindet.

17. Käfiganlage nach einem der vorhergehenden Ansprüche, **dadurch gekennzeichnet, daß** sie eine Einrichtung zur Kotbelüftung aufweist, die unterhalb der an den vorderen Futtertrog-Seiten der Käfige (1,1') befindlichen Futtertröge (6,6') angeordnete Luftführungskanäle (17,17') mit Austrittsöffnungen umfaßt, die gegen eine unter dem geneigten Käfigboden (12,12') befindliche Kotwanne (18) gerichtet sind.

## Claims

1. A cage system having cages for keeping poultry, particularly for keeping laying hens, having supply devices, for example for food and water, and removal devices, for example for eggs and/or also for waste, which are shared by the cages, each cage being equipped with a laying nest and a sand bath,
**characterized in that**
the outline of each cage (1) is approximately L-shaped, the sand bath (3) being positioned in the region of the free end of one of the legs of the L and two cages (1, 1') having an L-shaped outline being combined into a cage unit (4), each rotated by 180° in relation to one another, in such a way that the sand baths (3, 3') of the cages (1, 1') are arranged in a row behind one another aligned in one plane in the region of the lengthwise centerline of the cage unit (4) formed.

2. The cage system according to Claim 1,
**characterized in that**
it may be assembled from multiple cage units (4, 4', 4"), arrangeable in rows and stories, supply devices and removal devices being provided for each of the stories.

3. The cage system according to one of Claims 1 and 2,
**characterized in that**
the laying nests (2, 2') are located on alternate sides along the row of sand baths.

4. The cage system according to one of Claims 1 - 3,
**characterized in that**
the laying nest (2) of the first cage (1) of a cage unit (4) is positioned in a region which, when viewed in outline, immediately neighbors the sand bath (3') of the respective second cage (1'), and the regions of the sand baths (3, 3') and laying nests (2, 2') of a cage unit (4) which neighbor one another are separated from one another by a separating wall (5).

5. The cage system according to one of the preceding claims,
**characterized in that**
each cage (1, 1') of the cage unit (4) is equipped with an actuatable blocking device (13, 13') for alternately blocking or releasing the access to the laying nest (2, 2') or to the sand bath (3, 3').

6. The cage system according to Claim 5,
**characterized in that**
each blocking device (13, 13') includes suspended flaps (15, 16; 15', 16'), hanging in a V-shape in the cage (1, 1') from a rotationally actuatable shaft (14, 14'), one of the suspended flaps (16, 16') being assigned to the laying nest (2, 2') of the cage (1') and the other suspended flap (15, 15') being assigned to the sand bath (3, 3') of a cage (1) of a cage unit (4).

7. The cage system according to Claim 6,
**characterized in that**
cages (1, 1') located one behind another in one story inside the cage system have a shared continuous shaft (14, 14') having suspended flaps (15, 16; 15', 16').

8. The cage system according to one of the preceding claims,
**characterized in that**
each cage (1, 1') has a slanted floor (12, 12') which slopes toward the laying nest (2, 2') and sand bath (3, 3') and the removal device for eggs is located at the lowest point of the floor (12, 12') of the cages (1, 1'), approximately in the middle of a cage unit (14, 14', 14").

9. The cage system according to Claim 8,
**characterized in that**
the removal device for eggs is implemented as an egg belt (11), known per se, which extends through the cage units (4, 4', 4") inside one story of the cage system.

10. The cage system according to one of Claims 1 - 9,
**characterized in that**
the sand baths (3, 3') of each cage unit (4), and therefore the sand baths (3, 3') of the cage units (4, 4', 4") of one story, are positioned over the egg belt (11).

11. The cage system according to one of Claims 1 - 10,
**characterized in that**
each sand bath (3) is implemented as a box fillable with sand.

12. The cage system according to one of Claims 1 - 9,
**characterized in that**
the sand baths (3,3') located in a row are in the form of a channel and the floors of the sand baths (3,3') or of the channels are implemented as sand transport belts actuatable at intervals, one sand transport belt extending through each of the cages (1, 1') of the cage units (4, 4', 4") in a respectively assigned story of the cage system.

13. The cage system according to one of Claims 1 - 12,
**characterized in that**
each laying nest (2,2') is shielded from the inside of the cage (1, 1') using a shield element (19, 19').

14. The cage system according to Claim 13,
**characterized in that**
the shield element (19, 19') is a curtain, hanging in the cage (1, 1') in front of the laying nest (2, 2'), which has a slip-through opening incorporated approximately in the middle.

15. The cage system according to one of the preceding claims,
**characterized in that**
each cage (1, 1') is equipped with at least one sitting rod (8, 8') which is located in the region directly in front of the sand bath (3, 3') of the respective cage (1, 1').

16. The cage system according to one of Claims 1 - 15,
**characterized in that**
the supply device for water is equipped with drinking nipples (7, 7'), at least one of which is located in front of the laying nest (2, 2') of each cage (1, 1').

17. The cage system according to one of the preceding claims,
**characterized in that**
it has a device for waste aeration which includes air guide channels (17, 17') having outlet openings, positioned below the food troughs (6, 6') located on the front food trough sides of the cages (1, 1'), which are directed toward a waste tub (18) located under the slanted cage floors (12, 12').

## Revendications

1. Système de cages d'élevage de volailles, en particulier de poules pondeuses, comportant des dispositifs d'alimentation communs aux cages, par exemple pour la nourriture et l'eau ainsi que des dispositifs d'enlèvement, par exemple des oeufs ou encore des excréments, chaque cage étant équipée d'un nid de ponte et d'un lit de sable, **caractérisé en ce que** le plan de chaque cage (1) est à peu près en L, le lit de sable (3) étant disposé dans la zone de l'extrémité libre de l'une des branches du L et **en ce que** deux cages (1, 1') de plan en L sont réunies, tournées chacune de 180° par rapport à l'autre, en une unité de cages (4), de manière que les bacs à sable (3, 3') des cages (1, 1') soient disposés alignés l'un derrière l'autre en une rangée, dans un plan, dans la zone de la ligne médiane longitudinale de l'unité de cages (4) formée.

2. Système de cages selon la revendication 1, **caractérisé en ce qu'**il peut être composé de plusieurs unités de cages (4, 4', 4"), à disposer en rangées et étages, des dispositifs d'alimentation et des dispositifs d'enlèvement étant prévus pour chacun des étages.

3. Système de cages selon l'une des revendications 1 et 2, **caractérisé en ce que** les nids de ponte (2, 2') se trouvent en alternance le long de la rangée de lits de sable.

4. Système de cages selon l'une des revendications 1 à 3, **caractérisé en ce que** le nid de ponte (2) de la première cage (1) d'une unité de cages (4) est disposé dans une zone qui, vue en projection horizontale, est directement voisine du lit de sable (3') de la deuxième cage (1'), et **en ce que** les zones voisines les unes des autres des lits de sable (3, 3') et des nids de ponte (2, 2')d'une unité de cages (4) sont séparées les unes des autres par une cloison (5).

5. Système de cages selon l'une des revendications précédentes, **caractérisé en ce que** chaque cage (1, 1') d'une unité de cages (4) est équipée d'un dispositif d'arrêt (13, 13') pouvant être actionné, pour la fermeture ou l'autorisation au choix de l'accès au nid de ponte (2, 2') ou au lit de sable (3, 3').

6. Système de cages selon la revendication 5, **caractérisé en ce que** chaque dispositif d'arrêt (13, 13') comprend des clapets oscillants (15, 16 ; 15', 16'), pendant en V dans la cage (1, 1') d'un arbre (14, 14') pouvant être actionné en rotation, l'un des clapets oscillants (16, 16') étant associé au nid de ponte (2, 2') d'une cage (1') et l'autre clapet oscillant (15, 15') étant associé au lit de sable (3, 3') d'une cage (1) d'une unité de cages (4).

7. Système de cages selon la revendication 6, **caractérisé en ce que** des cages (1, 1'), qui se trouvent l'une derrière l'autre dans un étage à l'intérieur du système de cages, ont en commun un arbre (14, 14') continu avec des clapets oscillants (15, 16 ; 15', 16').

8. Système de cages selon l'une des revendications précédentes, **caractérisé en ce que** chaque cage (1, 1') comporte un fond (12, 12') incliné descendant vers le nid de ponte (2, 2') et le lit de sable (3, 3'), et **en ce que** le dispositif d'enlèvement des oeufs se trouve au point le plus bas du fond (12, 12') des cages (1, 1') approximativement au milieu d'une unité de cages (14, 14', 14").

9. Système de cages selon la revendication 8, **caractérisé en ce que** le dispositif d'enlèvement des oeufs est conformé en bande pour oeufs (11) connue en soi, qui s'étend à travers les unités de cages (4, 4', 4"), à l'intérieur d'un étage du système de cages.

10. Système de cages selon l'une des revendications 1 à 9, **caractérisé en ce que** les lits de sable (3, 3') de chaque unité de cages (4) et donc les lits de sable (3, 3') des unités de cages (4, 4', 4") d'un étage sont disposés au-dessus de la bande pour oeufs (11).

11. Système de cages selon l'une des revendications 1 à 10, **caractérisé en ce que** chaque lit de sable (3) est réalisé en tant que caisse remplie de sable.

12. Système de cages selon l'une des revendications 1 à 9, **caractérisé en ce que** des lits de sable (3, 3') se trouvant dans une rangée, ont la forme d'une goulotte et **en ce que** les fonds des lits de sable (3, 3') ou des goulottes sont réalisés en tant que bandes de transport de sable pouvant être actionnées à intervalles, un bande de transport de sable s'étendant à travers les cages (1, 1') des unités de cages (4, 4', 4") dans un étage respectif associé du système de cages.

13. Système de cages selon l'une des revendications 1 à 12, **caractérisé en ce que** chaque nid de ponte (2, 2') est protégé vers le volume intérieur de la cage (1, 1') au moyen d'un élément formant écran (19, 19').

14. Système de cages selon la revendication 13, **caractérisé en ce que** l'élément formant écran (19, 19') est un rideau suspendu dans la cage (1, 1') devant le nid de ponte (2, 2'), qui présente une ouverture de passage pratiquée approximativement au milieu.

15. Système de cages selon l'une des revendications précédentes, **caractérisé en ce que** chaque cage (1, 1') est équipée d'au moins un perchoir (8, 8') qui se trouve dans la zone située directement devant le lit de sable (3, 3') de la cage (1, 1') respective.

16. Système de cages selon l'une des revendications 1 à 15, **caractérisé en ce que** le dispositif d'alimentation en eau est équipé de godets à boire (7, 7') dont au moins l'un se trouve devant le nid de ponte (2, 2') de la cage (1, 1') respective.

17. Système de cages selon l'une des revendications précédentes, **caractérisé en ce qu'**il comporte un dispositif d'aération des excréments qui comprend des canaux de guidage d'air (17, 17') disposés au-dessous des mangeoires (6, 6') qui se trouvent sur les côtés avant des mangeoires des cages (1, 1'), avec des ouvertures de sortie qui sont orientées vers un bac à excréments (18) se trouvant sous le fond incliné (12, 12') de la cage.
